# FASCICULE DE BREVET EUROPEEN

(11) **EP 1 352 815 B1**
(45) Date de publication et mention de la délivrance du brevet: **08.12.2004**
(21) Numéro de dépôt: 03360036.2
(22) Date de dépôt: 07.03.2003
(51) Int. Cl.: B62D 63/06, B62D 53/00, B60P 1/64, B62B 3/04

(54) **Remorque pour train de convoyage**
Anhänger für Transportwagen
Trailer for transportation train

(30) Priorité: 11.04.2002 FR 0204685
(43) Date de publication de la demande: 15.10.2003
(73) Titulaire: Fideves S.A. à conseil d'administration, 67220 Neuve Eglise (FR)
(72) Inventeur: Schwab, Jean, 68500 Guebwiller (FR)
(74) Mandataire: Nithardt, Roland

(56) Documents cités:
- EP-A- 0 309 058
- WO-A-88/04618
- US-A- 4 052 084
- US-A- 5 906 384
- US-A1- 2002 124 764

## Description

La présente invention concerne une remorque pour train de convoyage, cette remorque comportant au moins une structure portante destinée à transporter au moins une charge, des moyens de roulement associés à cette structure portante et des moyens d'attelage agencés pour atteler ladite remorque à au moins une autre remorque ou à un véhicule tracteur dudit train de convoyage, ladite structure portante comportant un châssis solidaire des moyens de roulement et des moyens d'attelage, et au moins un plateau destiné à recevoir ladite charge et couplé de manière amovible audit châssis, ledit plateau comportant des moyens de roulement auxiliaires de manière à pouvoir être déplacé par rapport audit châssis, ledit châssis et ledit plateau comportant également des moyens de guidage du déplacement du plateau par rapport au châssis.

Le train de convoyage concerné par la présente invention est utilisé dans des zones de convoyage où l'approvisionnement et/ou le transit de charges est nécessaire comme par exemple dans les aéroports et/ou les gares pour assurer le transport des bagages et/ou de toute autre charge en transit, dans les usines de fabrication, de transformation, de lignes de production pour assurer l'approvisionnement des postes de travail en matières premières, pièces et composants ainsi que l'évacuation des pièces ou sous-ensembles fabriqués et/ou assemblés vers d'autres postes de travail, etc. Ce type de train de convoyage permet de transporter les charges en caisse, en container, sur palette ou sous toute autre forme équivalente, entre plusieurs zones, qui peuvent être des zones de déchargement, de stockage, de fabrication, de montage, d'assemblage, de chargement, etc. Le train de convoyage peut suivre ou non une piste prédéfinie et peut circuler sur une trajectoire en boucle fermée le ramenant par exemple à son point de départ. Il peut également être programmé pour effectuer des parcours type et/ou être muni de capteurs de présence pour circuler en mode automatique et éviter les obstacles.

Les charges transportées n'ont pas nécessairement la même destination et sont habituellement chargées et déchargées des remorques au moyen d'engins de manutention tels que des chariots élévateurs. Ceci impose la mise à disposition permanente d'un ou de plusieurs caristes dont la fonction est de délivrer la charge à l'endroit voulu. Pour limiter la manutention des charges et simplifier la logistique, certaines remorques peuvent être dételées, ce qui permet de délivrer directement la charge avec sa remorque à l'endroit voulu et ainsi d'économiser le déplacement d'un engin de manutention. Néanmoins, le fait de dételer la remorque demande un temps d'intervention relativement long et fastidieux qui génère des temps d'arrêt importants du train de convoyage. Pour permettre au train de convoyage de poursuivre son chemin, les remorques restantes doivent être attelées. Cette intervention impose au conducteur du train de convoyage d'effectuer des manoeuvres et demande également une intervention longue et fastidieuse.

Certaines solutions ont été imaginées pour essayer de résoudre une partie des inconvénients mentionnés ci-dessus. Notamment, la publication US-A-5 906 384 décrit une remorque constituée d'un châssis formé d'un cadre porté par quatre roues et dont deux côtés adjacents sont pivotants pour ouvrir ce cadre et recevoir un plateau porte charge amovible lui aussi porté par quatre roues. Cette solution n'est pas optimale car elle ne supprime pas les opérations de dételage-attelage nécessaires pour déplacer la charge par rapport à la remorque. De plus, le châssis étant porté par quatre roues ne peut pas suivre la piste d'une trajectoire donnée, les virages étant systématiquement coupés. Enfin, la remorque n'est pas réversible, ce qui est préjudiciable en terme d'encombrement au sol.

La publication EP-A-309 058 décrit une remorque dont le châssis en forme de U est porté par quatre roues pour recevoir un plateau porte charge amovible également porté par quatre roues, cette publication décrit une remorque selon le préambule de la revendication 1. Cette solution présente les mêmes inconvénients que ceux mentionnés ci-dessus relatifs au suivi d'une trajectoire et à la réversibilité de la remorque.

Le but de la présente invention est de résoudre les inconvénients ci-dessus en proposant une remorque simple, économique et très flexible pouvant livrer les charges à l'endroit voulu rapidement, sans intervention fastidieuse, avec un minimum d'efforts et un temps d'arrêt relativement court pour le train de convoyage de manière à simplifier considérablement la logistique et offrir une plus grande souplesse d'organisation dans le convoyage des charges d'un endroit à un autre, en réduisant l'investissement en matériels de manutention. Le but est également de proposer une remorque pouvant suivre les traces d'une trajectoire donnée sans couper les virages et pouvant être réversible pour réduire l'encombrement au sol et optimiser les trajectoires.

Dans ce but, invention concerne une remorque telle que définie en préambule et caractérisée en ce que les moyens de guidage comportent au moins un rail et un contre-rail de forme au moins partiellement complémentaire et prévus l'un sur ledit châssis et l'autre sur ledit plateau et en ce que lesdits moyens de roulement sont disposés sous ledit rail central et comportent au moins deux roues fixes dont les axes de rotation sont sensiblement confondus.

Dans une forme préférée de l'invention, la remorque comporte des moyens de verrouillage agencés pour bloquer ledit plateau lorsqu'il est couplé audit châssis.

Le châssis peut être constitué d'un cadre en forme de C ouvert latéralement ou d'un cadre fermé dont un côté latéral est amovible pour libérer le passage de manière à pouvoir extraire le plateau du châssis sans dételer la remorque.

Dans ce dernier cas, le côté latéral peut être relié au cadre par au moins une articulation pour être mobile entre une position baissée et une position levée et comporter des moyens de verrouillage agencés pour le bloquer en position baissée. Il peut également comporter des moyens de préhension agencés pour faciliter sa manipulation entre ses positions baissée et levée.

Dans la forme de réalisation préférée, le rail central est prévu dans le châssis selon un direction sensiblement perpendiculaire à l'axe passant par les moyens d'attelage.

De préférence, axe de rotation des roues du châssis est sensiblement équidistant aux axes d'articulation des moyens d'attelage. Le rail central délimite avec le cadre du châssis deux logements sensiblement parallèles pour le passage des roues auxiliaires dudit plateau quand il est couplé audit châssis.

Les moyens de roulement auxiliaires du plateau peuvent être constitués d'au moins quatre roues auxiliaires libres disposées dans chaque angle dudit plateau et formant une paire de roues auxiliaires avant et une paire de roues auxiliaires arrière entre lesquelles est disposé un contre-rail central.

Le rail et le contre-rail comportent de préférence au moins une section partiellement conique et au moins une zone d'introduction chanfreinée agencée pour faciliter l'engagement du contre-rail sur le rail.

Au moins le châssis ou le plateau comporte des moyens d'amortissement agencés pour réduire le jeu existant entre eux au moins dans le sens de traction de la remorque, sous la forme de butoirs en matière souple disposés au moins entre le rail et le contre-rail.

Le plateau peut comporter des moyens de préhension agencés pour faciliter son déplacement et au moins une plate-forme délimitant des passages de fourches pour un engin de manutention, cette plate-forme pouvant être inclinable.

La présente invention et ses avantages apparaîtront mieux dans la description suivante d'un exemple de réalisation, en référence aux dessins annexés, dans lesquels:
- la figure 1 représente en perspective un exemple de train de convoyage formé d'un ensemble de remorques selon une première forme de réalisation de l'invention,
- la figure 2 est une vue en perspective d'une remorque de la figure 1 dans laquelle le plateau portant une charge et le châssis sont couplés,
- la figure 3 est une vue en perspective de la remorque de la figure 2 dans laquelle le plateau portant la charge et le châssis sont découplés,
- la figure 4 est une vue en perspective du plateau et de la charge séparés,
- la figure 5 représente en perspective un autre exemple de train de convoyage formé d'un ensemble de remorques selon une seconde forme de réalisation de l'invention, et
- la figure 6 est une vue en perspective d'une remorque de la figure 5 dans laquelle le plateau portant la charge et le châssis sont découplés.

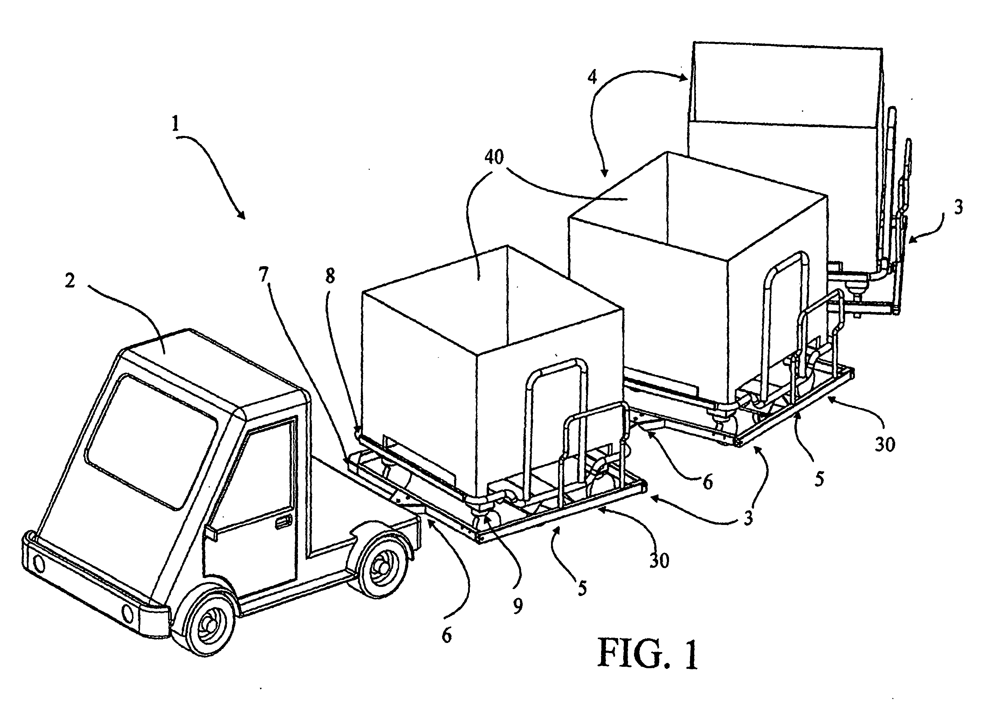

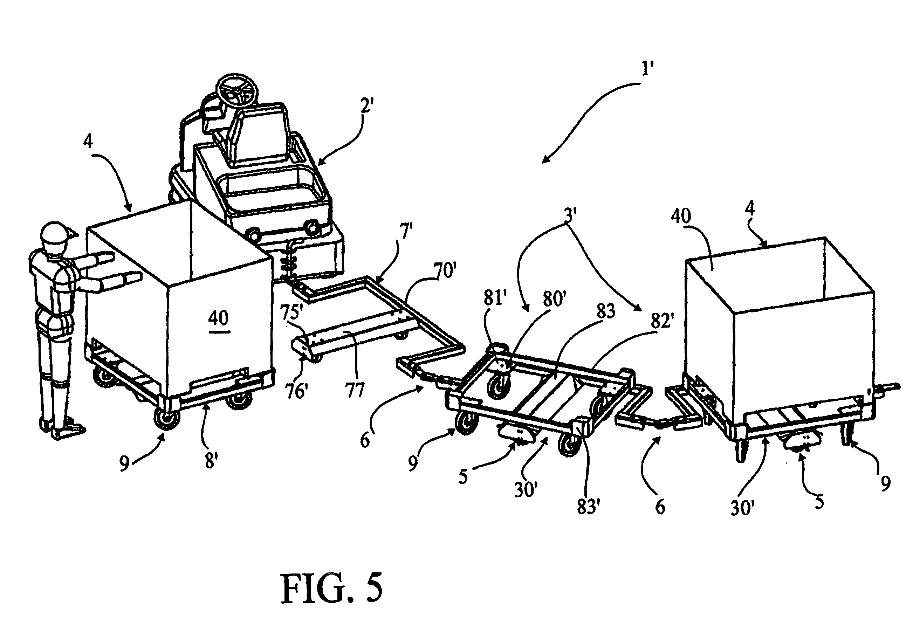

En référence aux figures 1 et 5, le train de convoyage 1, 1' concerné par la présente invention comporte un véhicule tracteur 2, 2' auquel est attelé un ensemble de remorques 3, 3' attelées l'une à l'autre. Ce véhicule tracteur 2, 2' peut être indépendamment attelé d'un côté ou de l'autre côté des remorques 3, 3' rendant le train de convoyage 1, 1' réversible, notamment dans les zones où le train de convoyage 1, 1' ne peut pas faire demi-tour. Chaque remorque 3, 3' comporte au moins une structure portante 30, 30' destinée à transporter au moins une charge 4, des moyens de roulement 5 associés à cette structure portante 30, 30' et des moyens d'attelage 6 avant et arrière. Ces remorques 3, 3' sont également réversibles puisqu'elles peuvent être tractées aussi bien dans une direction que dans l'autre grâce à la conception de leurs moyens de roulement 5.

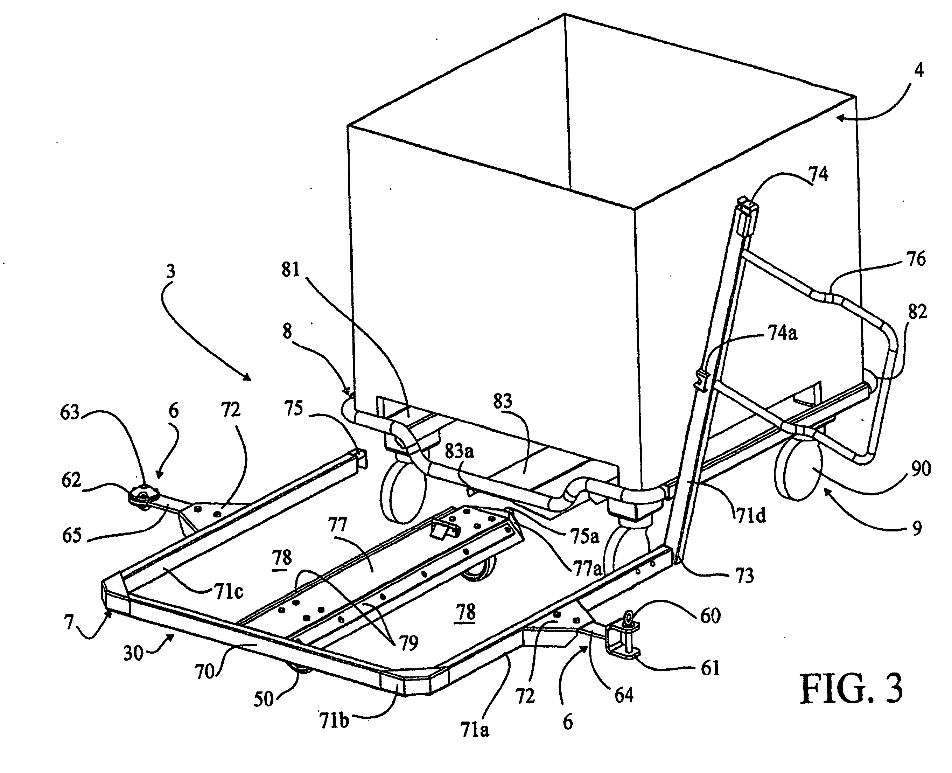

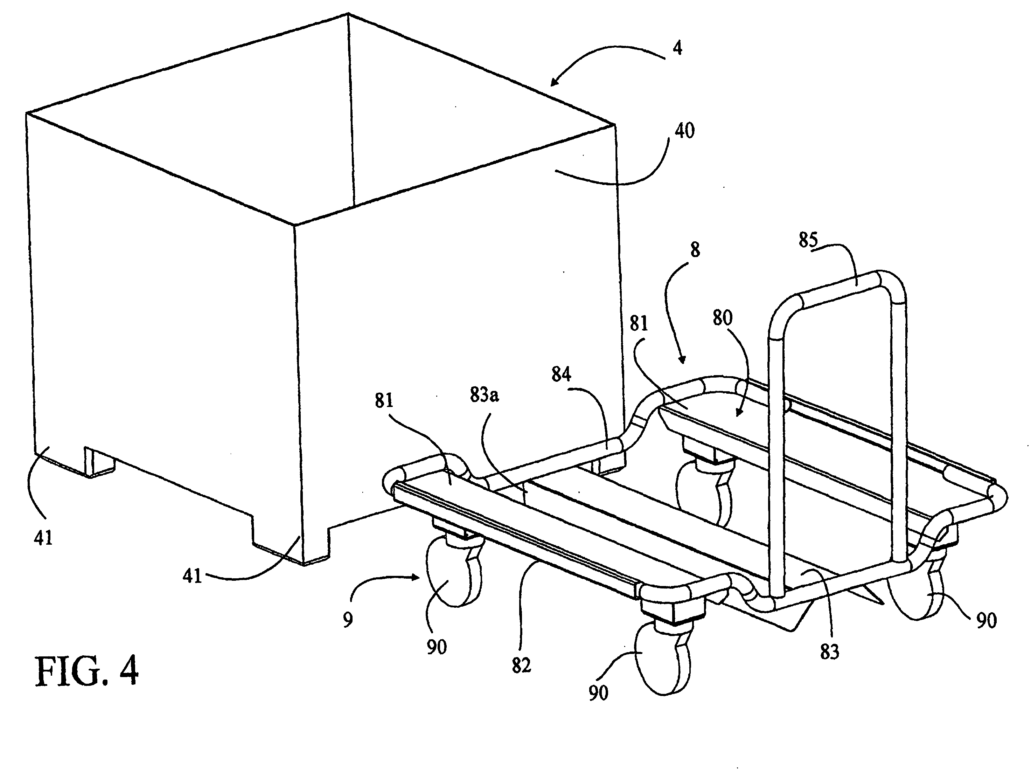

La charge 4 représentée sur les figures 1 à 6 est symbolisée par un conteneur 40 cubique apte à recevoir tout type de sous-ensembles, pièces, composants ou matières premières. Ce conteneur 40 comporte dans ses angles quatre pieds 41 délimitant entre eux un espace suffisant pour recevoir les fourches d'un engin de manutention, quand il doit être transféré par exemple d'un camion de transport au train de convoyage 1, 1' et inversement. Cette charge 4 peut également se présenter sous d'autres formes telles qu'une palette, des caisses, des sacs, des valises, etc. selon les besoins.

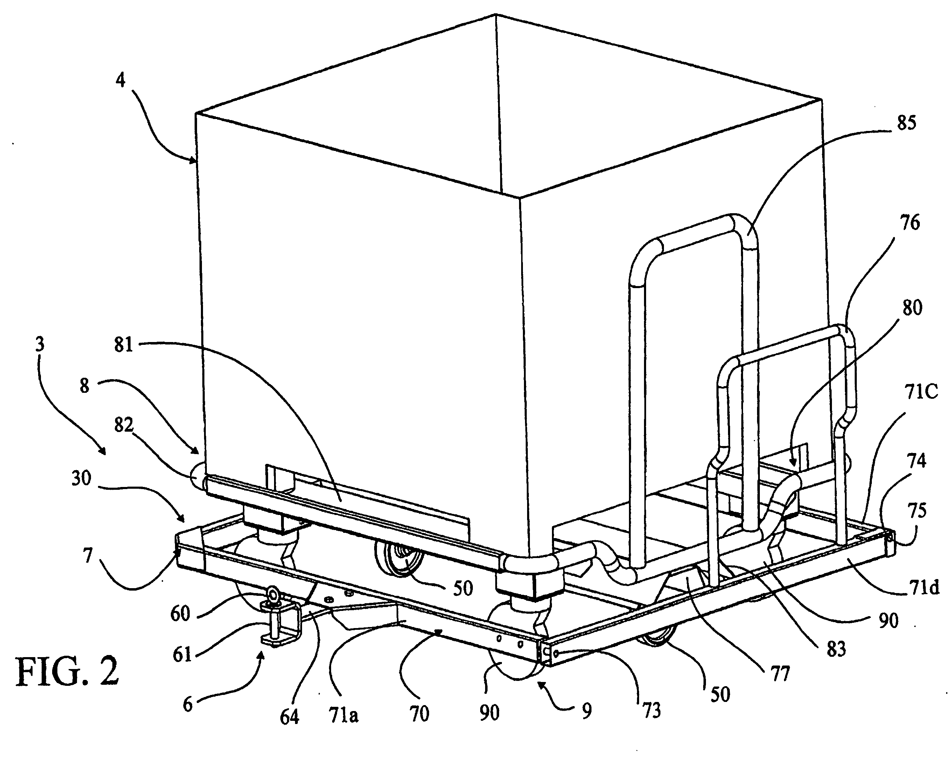

Les moyens d'attelage 6 reliant les remorques 3, 3' et le véhicule tracteur 2, 2' sont classiques et comportent d'un côté une goupille 60 montée transversalement dans une bride 61 à l'extrémité d'un bras 64 et de l'autre côté une tête 62 traversée par un alésage 63 à l'extrémité d'un bras 65 (cf. fig. 2, 3, 6). Pour atteler les remorques 3, 3' entre elles ou la première remorque 3, 3' au véhicule tracteur 2, 2', on retire là goupille 60 d'une remorque 3, 3', on introduit la tête 62 de la remorque 3, 3' précédente ou du véhicule tracteur 2, 2' dans la bride 61 et on replace la goupille 60 dans la bride 61 au travers de l'alésage 63 de la tête 62. Cet assemblage forme une articulation à un degré de liberté, à savoir une rotation autour d'un axe sensiblement perpendiculaire au plan sur lequel circule le train de convoyage 1, 1' comme par exemple le sol. Ces moyens d'attelage 6 peuvent également être constitués de rotules formant une articulation à deux ou à trois degrés de liberté en rotation ou de tout autre moyen équivalent. Ces moyens d'attelage 6 peuvent comporter une roue support (non représentée) orientée en direction du sol et permettant de limiter le basculement de la remorque 3, 3' quand elle n'est pas attelée.

Les moyens de roulement 5 associés à chaque remorque 3, 3' sont constitués de deux roues fixes 50 dont les axes de rotation sont sensiblement confondus. Cet axe de rotation est sensiblement perpendiculaire au plan passant par les axes d'articulation des moyens d'attelage 6 de la remorque 3, 3'. De plus, il est disposé à égale distance de ces axes d'articulation de manière à ce que les roues fixes 50 de toutes les remorques 3, 3' suivent une même trajectoire appelée mono trace. Bien entendu, d'autres formes de réalisation des moyens de roulement 5 sont également envisageables en fonction des besoins.

En référence aux figures 1 à 3, 5 et 6, la structure portante 30, 30' de chaque remorque 3, 3' selon l'invention est scindée en deux parties : une partie dite fixe 7, 7' qui reste attelée au train de convoyage 1, 1' et une partie dite mobile 8, 8' qui porte la charge 4 et peut être détachée de la partie dite fixe 7, 7' sans modifier l'attelage des remorques 3, 3'. La partie dite fixe est constituée d'un châssis 7, 7' solidaire des moyens de roulement 5 et des moyens d'attelage 6 de la remorque 3, 3' et la partie dite mobile est constituée d'un plateau 8, 8' destiné à recevoir la charge 4 et couplé de manière amovible au châssis 7, 7'. Ce plateau 8, 8' comporte ses propres moyens de roulement 9 dits auxiliaires de manière à pouvoir être déplacé par rapport au châssis 7, 7' librement, manuellement et sans aucun engin de manutention.

Dans l'exemple représenté dans les figures 1 à 3, le châssis 7 est constitué d'un cadre 70 plan, fermé, formé de quatre profilés 71a-d. Les profilés avant 71a et arrière 71c portent les moyens d'attelage 6 de la remorque 3 dans deux supports triangulaires 72. Au moins un des profilés latéraux 71d est amovible pour ouvrir le cadre 70 et pour permettre le passage du plateau 8. L'autre profilé latéral 71b est fixe, dans l'exemple représenté, mais peut également être amovible si le plateau 8 doit être amené d'un côté du châssis 7 et récupéré de l'autre côté. Dans le cas d'une remorque 3 unique ou de la dernière remorque 3 du train de convoyage 1, le profilé amovible peut être le profilé arrière 71c. Ce profilé latéral 71d amovible est relié, par exemple, au profilé avant 71a par une articulation 73 pour être mobile entre une position baissée et une position levée. Il comporte des moyens de verrouillage agencés pour le bloquer en position baissée et pour bloquer simultanément le plateau 8 sur le châssis 7 quand ils sont couplés. Ces moyens de verrouillage sont formés d'une patte d'emboîtement 74 prévue à l'extrémité du profilé latéral 71d amovible et d'un doigt de verrouillage 75 prévu à l'extrémité du profilé arrière 71c à l'opposé de l'articulation 73. Ils peuvent être complétés par une serrure, un cadenas ou tout autre moyen de sécurité équivalent. Le profilé latéral 71d amovible comporte encore des moyens de préhension agencés pour faciliter sa manipulation entre ses positions baissée et levée. Ces moyens de préhension sont constitués d'un arceau 76 pouvant être saisi à hauteur d'homme. Cet arceau 76 forme également un butoir par rapport au sol pour limiter le débattement du profilé latéral 71d en position levée.

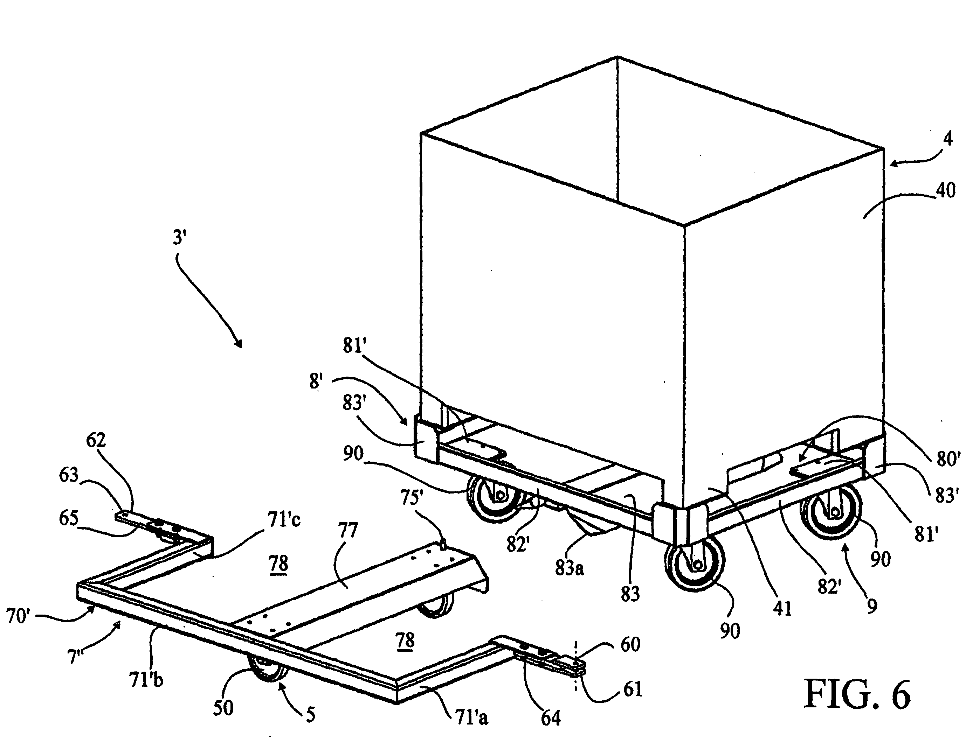

Dans l'exemple représenté dans les figures 5 et 6, le châssis 7' est constitué d'un cadre 70' plan, ouvert en C, formé de trois profilés 71'a-c : un profilé latéral 71b reliant un profilé avant 71a et un profilé arrière 71c qui portent les moyens d'attelage 6 de la remorque 3'. Le côté latéral opposé au profilé latéral 71b est totalement ouvert et permet d'introduire ou d'extraire librement le plateau 8'. Comme décrit plus loin, le châssis 7' comporte également des moyens de verrouillage agencés pour bloquer le plateau 8' sur le châssis 7' quand ils sont couplés.

Le châssis 7, 7' comporte, tout particulièrement, un rail central 77 disposé sensiblement perpendiculairement aux profilés latéraux 71b, 71d, 71b du cadre 70, 70'. Il est constitué d'une traverse dont la section a une forme sensiblement en V inversé et tronqué. Il porte dans son espace intérieur les deux roues fixes 50 des moyens de roulement 5 de la remorque 3, 3'. Ce rail central 77 délimite avec les profilés avant 71a, 71'a et arrière 71c, 71'c du cadre 70, 70', deux logements transversaux 78 pour recevoir les moyens de roulement auxiliaires 9 du plateau 8, 8'. Il peut encore être complété par tout moyen permettant de contenir et/ou de sécuriser le plateau 8, 8' et/ou la charge 4 par exemple des parois latérales et/ou supérieure, pleines, grillagées, formées de traverses, etc., proposées dans le châssis 7, 7' de base ou en option, intégrées ou rapportées.

Dans l'exemple représenté, ce plateau 8, 8' est constitué d'au moins une plate-forme 80, 80' sensiblement horizontale. Selon la charge 4 transportée, cette plate-forme 80, 80' peut être inclinée ou être articulée pour pouvoir modifier son inclinaison et faciliter par exemple la préhension de la charge 4. Les moyens de roulement auxiliaires 9 associés à ce plateau 8, 8' comportent quatre roues auxiliaires 90 montées sous la plate-forme 80, 80' dans chaque angle du plateau 8, 8' et formant une paire de roues auxiliaires 90 avant et une paire de roues auxiliaires 90 arrière. Ces roues auxiliaires 90 sont de préférence des roues libres, à savoir à pivotement libre, pour pouvoir suivre la trajectoire imposée par le train de convoyage 1, 1' lorsque le plateau 8, 8' est couplé au châssis 7, 7' et pour permettre un déplacement aisé du plateau 8, 8' lorsqu'il est découplé du châssis 7, 7' et déplacé manuellement. Bien entendu, d'autres moyens de roulement peuvent être envisagés.

Dans l'exemple représenté dans les figures 1 à 4, la plate-forme 80 n'est pas complète et se limite à deux plates-formes 81 avant et arrière portant chacune une paire de roues auxiliaires 90 et assemblées par un pourtour 82 tubulaire. Dans l'exemple représenté dans les figures 5 et 6, la plate-forme 80' est limitée à quatre plaques d'angle 81' prévues pour porter chacune une roue auxiliaire 90 et assemblées par des profilés formant un pourtour 82' rehaussé de coins 83'. La forme du plateau 8, 8' est bien entendu adaptée à la charge 4 à porter et peut varier selon la nature de cette charge 4.

Dans la zone médiane, le plateau 8, 8' comporte tout particulièrement un contre-rail 83 sensiblement parallèle aux paires de roues auxiliaires 90. Ce contre-rail 83 est constitué d'une traverse dont la section a une forme sensiblement en V inversé et tronqué complémentaire à celle du rail 77 prévu sur le châssis 7, 7'. Le contre-rail 83 est disposé en dessous du plan défini par la plate-forme 80, 80' pour être au même niveau que le rail 77 du châssis 7, 7'. Cette géométrie permet également de dégager des passages de fourches sous le plateau 8, 8' entre les roues auxiliaires 90 et le contre-rail 83 pour permettre à un engin de manutention de transporter au besoin le plateau 8, 8' chargé ou non, par exemple pour les gerber dans une zone de stockage. Ce plateau 8, des figures 1 à 4, est complété par des moyens de préhension facilitant sa manoeuvre par poussée ou traction manuelle à hauteur d'homme. Ces moyens de préhension comportent un arceau 85 prévu au moins sur un des côtés du plateau 8 et solidaire du pourtour 82. D'autres arceaux 85 peuvent également être prévus sur les autres côtés du plateau 8.

Le rail 77 et le contre-rail 83 forment des moyens de guidage par coulissement du plateau 8, 8' par rapport au châssis 7, 7'. Ils comportent une zone d'introduction 77a, 83a chanfreinée facilitant l'éngagement du contre-rail 83 sur le rail 77. Leur forme tronconique est avantageuse car elle assure un auto-centrage du plateau 8, 8' par rapport au châssis 7, 7'. Le fait que le rail 77 soit disposé dans une zone médiane du châssis 7, 7' permet de centrer le poids du plateau 8, 8' et de sa charge 4 sur le châssis 7,7' sans contrainte sur les moyens d'attelage 6. Néanmoins, ces moyens de guidage peuvent être constitués par tout autre moyen équivalent. Ces moyens de guidage sont également associés à des moyens de verrouillage pour bloquer le plateau 8, 8' par rapport au châssis 7, 7' quand ils sont couplés. En référence aux figures 1 à 4, ces moyens de verrouillage comportent le profilé latéral 71d amovible du châssis 7 qui est complété par une encoche 74a apte à s'engager sur un téton 75a solidaire de l'extrémité libre du rail 77. En référence aux figures 5 et 6, ces moyens de verrouillage sont constitués d'un doigt de verrouillage 75' amovible prévu dans la zone d'extrémité libre du rail 77 du châssis 7' et destiné à se loger dans un orifice complémentaire (non représenté) prévu sous le contre-rail 83 du plateau 8'. Ce doigt de verrouillage 75' est sollicité en position verrouillée par un organe ressort (non représenté) et en position déverrouillée par une pédale 76' manoeuvrable au pied. Bien entendu tout autre moyen équivalent peut convenir.

Dans la forme de réalisation des figures 1 à 3, pour éviter les chocs et les bruits dus à ces chocs lorsque le plateau 8 est couplé au châssis 7 et que la remorque 3 est tractée par le train de convoyage 1, des moyens d'amortissement sont disposés au moins entre le rail 77 et le contre-rail 83. Ces moyens d'amortissement sont constitués, dans l'exemple représenté, d'un butoir 79 en caoutchouc, élastomère ou toute autre matière souple équivalente ayant des propriétés amortissantes, rapporté sur les deux pans inclinés du rail 77. Ces moyens d'amortissement peuvent aussi être constitués de toute autre forme de butoirs 79 et disposés entre le cadre 70 du châssis 7 et le pourtour tubulaire 82 du plateau 8. L'objectif premier est de réduire le jeu existant entre le châssis 7 et le plateau 8 dans le sens de traction de la remorque 3. On peut également réduire le jeu existant latéralement.

Le train de convoyage 1, 1' formé par les remorques 3, 3' de l'invention permet d'optimiser de manière importante la logistique du transfert, de l'approvisionnement et de l'évacuation des charges 4. Le train de convoyage 1, 1' circule par exemple dans une usine en vue d'alimenter des postes de travail en pièces et d'évacuer ces mêmes postes de travail des sous-ensembles assemblés. Les plateaux 8, 8' portant les conteneurs 40 de pièces, couplés aux châssis 7, 7' par la liaison rail 77-contre-rail 83, sont tractés automatiquement, leurs roues auxiliaires 90 étant passives. Sur son trajet, le train de convoyage 1, 1' s'arrête à des endroits stratégiques dans lesquels les conteneurs 40 de pièces doivent être livrés. A cet effet et dans la variante des figures 1 à 4, un opérateur relève le profilé latéral 71d amovible du châssis 7 correspondant à l'aide de son arceau 76 et saisit l'arceau 85 du plateau 8 pour l'extraire du châssis 7 par simple coulissement comme un tiroir. Il peut aussi, dans la variante des figures 5 et 6, abaisser le doigt de verrouillage 75' pour extraire directement le plateau 8' du châssis 7' en le saisissant directement par la charge 4. Les roues auxiliaires 90 qui portent le plateau 8, 8' permettent alors de le diriger très facilement et sans grand effort par l'opérateur pour l'amener directement à un poste de travail. Une fois les plateaux 8, 8' extraits de leur châssis 7, 7', le train de convoyage 1, 1' peut continuer son trajet jusqu'à un prochain arrêt. Son temps d'arrêt est par conséquent très restreint. Ce train de convoyage 1, 1'peut ensuite transporter d'autres plateaux 8, 8' chargés ou non. Les plateaux 8, 8' peuvent être préparés à l'avance avec leur charge 4 et être stockés horizontalement ou verticalement par gerbage. Ce système de transport permet de livrer et de reprendre des charges 4, très facilement, rapidement, dans un ordre quelconque, en toute sécurité, ce qui a pour effet d'améliorer et d'assouplir le flux des charges 4, de gagner du temps et de travailler en temps masqué.

Il ressort clairement de cette description que l'invention permet d'atteindre tous les buts fixés. Cependant, la présente invention n'est pas limitée aux exemples de réalisation décrits mais s'étend à toute modification et variante évidentes pour un homme du métier tout en restant dans l'étendue de la protection définie dans les revendications annexées. Il est évident que la forme et la constitution des châssis 7, 7' peuvent varier en fonction de la forme et de la constitution des plateaux 8, 8'.

## Revendications

1. Remorque (3, 3') pour train de convoyage (1, 1'), cette remorque (3, 3') comportant au moins une structure portante (30, 30') destinée à transporter au moins une charge (4), des moyens de roulement (5) associés à cette structure portante (30, 30') et des moyens d'attelage (6) agencés pour atteler ladite remorque (3, 3') à au moins une autre remorque (3, 3') ou à un véhicule tracteur (2, 2') dudit train de convoyage (1), la structure portante (30, 30') comportant un châssis (7, 7') solidaire des moyens de roulement (5) et des moyens d'attelage (6), et au moins un plateau (8, 8') destiné à recevoir ladite charge (4) et couplé de manière amovible audit châssis (7, 7'), ledit plateau (8, 8') comportant des moyens de roulement auxiliaires (9) de manière à pouvoir être déplacé par rapport audit châssis (7,7'), ledit châssis (7, 7') et ledit plateau (8, 8') comportant des moyens de guidage du déplacement du plateau (8, 8') par rapport au châssis (7, 7'), **caractérisée en ce que** les moyens de guidage comportent au moins un rail (77) et un contre-rail (83) de forme au moins partiellement complémentaire et prévus l'un sur ledit châssis (7, 7') et l'autre sur ledit plateau (8, 8') et **en ce que** lesdits moyens de roulement (5) sont disposés sous ledit rail central (77) et comportent au moins deux roues (50) fixes dont les axes de rotation sont sensiblement confondus.

2. Remorque (3, 3') selon la revendication 1, **caractérisée en ce qu'**elle comporte des moyens de verrouillage (71d, 75') agencés pour bloquer ledit plateau (8, 8') lorsqu'il est couplé audit châssis (7, 7').

3. Remorque (3') selon la revendication 1, **caractérisée en ce que** ledit châssis (7') est constitué d'un cadre (70') en forme de C ouvert latéralement de manière à pouvoir extraire ledit plateau (8') dudit châssis (7') sans dételer ladite remorque (3').

4. Remorque (3) selon la revendication 1, **caractérisée en ce que** ledit châssis (7) est constitué d'un cadre (70) fermé, dont un côté latéral (71d) est amovible pour libérer le passage de manière à pouvoir extraire ledit plateau (8) dudit châssis (7) sans dételer ladite remorque (3).

5. Remorque (3) selon la revendication 4, **caractérisée en ce que** ledit côté latéral (71d) est relié audit cadre (70) par au moins une articulation (73) pour être mobile entre une position baissée et une position levée.

6. Remorque (3) selon la revendication 5, **caractérisée en ce que** ledit côté latéral (71d) comporte des moyens de verrouillage (74, 75) agencés pour le bloquer en position baissée.

7. Remorque (3) selon la revendication 5, **caractérisée en ce que** ledit côté latéral (71d) comporte des moyens de préhension (76) agencés pour faciliter sa manipulation entre ses positions baissée et levée.

8. Remorque (3, 3') selon la revendication 1, **caractérisée en ce que** ledit rail central (77) est prévu dans ledit châssis (7, 7') selon une disposition sensiblement perpendiculaire à l'axe passant par les moyens d'attelage (6).

9. Remorque (3, 3') selon la revendication 1, **caractérisée en ce que** l'axe de rotation des roues (50) dudit châssis (7, 7') est sensiblement équidistant aux axes d'articulation des moyens d'attelage (6).

10. Remorque (3, 3') selon la revendication 1, **caractérisée en ce que** lesdits moyens de roulement auxiliaires (9) dudit plateau (8, 8') sont constitués d'au moins quatre roues auxiliaires (90) libres disposées dans chaque angle dudit plateau (8, 8') et formant une paire de roues auxiliaires avant et une paire de roues auxiliaires arrière.

11. Remorque (3, 3') selon la revendication 1, **caractérisée en ce que** ledit contre-rail central (83) prévu sur ledit plateau (8, 8') est disposé entre lesdites paires de roues auxiliaires (90) avant et arrière.

12. Remorque (3, 3') selon les revendications 8 et 11, **caractérisée en ce que** le rail central (77) délimite avec ledit cadre (70) du châssis (7, 7') deux logements (78) sensiblement parallèles pour le passage des roues auxiliaires (90) dudit plateau (8, 8') quand il est couplé audit châssis (7, 7').

13. Remorque (3, 3') selon les revendications 8 et 11, **caractérisée en ce que** ledit rail (77) et ledit contre-rail (83) comportent au moins une zone d'introduction (77a, 83a) chanfreinée agencée pour faciliter l'engagement dudit contre-rail (83) sur ledit rail (77).

14. Remorque (3) selon la revendication 1, **caractérisée en ce qu'**au moins l'un dudit châssis (7) ou dudit plateau (8) comporte des moyens d'amortissement agencés pour réduire le jeu existant entre eux au moins dans le sens de traction de ladite remorque (3).

15. Remorque (3) selon la revendication 14, **caractérisée en ce que** lesdits moyens d'amortissement sont constitués de butoirs (79) en matière souple disposés au moins entre ledit rail (77) et ledit contre-rail (83).

16. Remorque (3) selon la revendication 1, **caractérisée en ce que** ledit plateau (8) comporte des moyens de préhension (85) agencés pour faciliter son déplacement.

17. Remorque (3, 3') selon la revendication 1, **caractérisée en ce que** ledit plateau (8, 8') comporte au moins une plate-forme (80, 80') délimitant des passages de fourches pour un engin de manutention.

18. Remorque selon la revendication 1, **caractérisée en ce que** ledit plateau comporte au moins une plate-forme inclinable.

## Patentansprüche

1. Anhänger (3,3') für einen Transportzug (1,1'), wobei der Anhänger (3,3') mindestens eine Tragkonstruktion (30,30'), die zum Transportieren mindestens einer Last (4) bestimmt ist, und mit dieser Tragkonstruktion (30,30') verbundene Rolleinrichtungen (5) und Kuppeleinrichtungen (6) aufweist, die dafür vorgesehen sind, den Anhänger (3,3') mit mindestens einem weiteren Anhänger (3,3') oder mit einem Zugfahrzeug (2,2') des Transportzuges (1) zu verbinden, wobei die Tragkonstruktion (30,30') ein fest mit den Rolleinrichtungen (5) und den Kuppeleinrichtungen (6) verbundenes Gestell (7,7') und mindestens eine Platte (8,8') aufweist, die zur Aufnahme der Last (4) vorgesehen und lösbar mit dem Gestell (7,7') verbunden ist, wobei die Platte (8,8') Hilfsrolleinrichtungen (9) aufweist, so dass sie im Verhältnis zu dem Gestell (7,7') verlagerbar ist, wobei das Gestell (7,7') und die Platte (8,8') Einrichtungen zum Führen der Verlagerung der Platte (8,8') im Verhältnis zu dem Gestell (7,7') aufweisen, **dadurch gekennzeichnet, dass** die Führungseinrichtungen mindestens eine Schiene (77) und eine Leitschiene (83) umfassen, die eine zumindest teilweise komplementäre Form aufweist, wovon eine auf dem Gestell (7,7') und die andere auf der Platte (8,8') vorgesehen ist, und dass die Rolleinrichtungen (5) unter der mittigen Schiene (77) angeordnet sind und mindestens zwei feststehende Räder (50) aufweisen, deren Drehachsen praktisch zusammenfallen.

2. Anhänger (3,3') nach Anspruch 1, **dadurch gekennzeichnet, dass** er Verriegelungs-. einrichtungen (71d,75') aufweist, die dafür vorgesehen sind, die Platte (8,8') zu blockieren, wenn sie mit dem Gestell (7,7') verbunden ist.

3. Anhänger (3') nach Anspruch 1, **dadurch gekennzeichnet, dass** das Gestell (7') aus einem C-förmigen Rahmen (70') besteht, der seitlich so offen ist, dass die Platte (8') ohne Entkuppeln des Anhängers (3') aus dem Gestell (7') herausziehbar ist.

4. Anhänger (3) nach Anspruch 1, **dadurch gekennzeichnet, dass** das Gestell (7) aus einem geschlossenen Rahmen (70) besteht, dessen Seite (71d) lösbar ist, um den Durchgang so freizugeben, dass die Platte (8) ohne Entkuppeln des Anhängers (3) aus dem Gestell (7) herausziehbar ist.

5. Anhänger (3) nach Anspruch 4, **dadurch gekennzeichnet, dass** die Seite (71 d) mit dem Rahmen (70) über mindestens ein Gelenk (73) so verbunden ist, dass sie zwischen einer abgesenkten Position und einer angehobenen Position bewegbar ist.

6. Anhänger (3) nach Anspruch 5, **dadurch gekennzeichnet, dass** die Seite (71d) Verriegelungseinrichtungen (74,75) aufweist, die dafür vorgesehen sind, sie in der abgesenkten Position zu blockieren.

7. Anhänger (3) nach Anspruch 5, **dadurch gekennzeichnet, dass** die Seite (71d) Greifeinrichtungen (76) aufweist, die dafür vorgesehen sind, ihre Handhabung zwischen ihrer abgesenkten und angehobenen Position zu erleichtern

8. Anhänger (3,3') nach Anspruch 1, **dadurch gekennzeichnet, dass** die mittige Schiene (77) in dem Gestell (7,7') entsprechend einer zu der durch die Kuppeleinrichtungen (6) verlaufenden Achse praktisch senkrechten Anordnung vorgesehen ist.

9. Anhänger (3,3') nach Anspruch 1, **dadurch gekennzeichnet, dass** die Drehachse der Räder (50) des Gestells (7,7') praktisch abstandsgleich zu den Gelenkachsen der Kuppeleinrichtungen (6) ist.

10. Anhänger (3,3') nach Anspruch 1, **dadurch gekennzeichnet, dass** die Hilfsrolleinrichtungen (9) der Platte (8,8') aus mindestens vier freilaufenden Hilfsrädern (90) bestehen, die in jedem Winkel der Platte (8,8') angeordnet sind und ein vorderes Paar von Hilfsrädern und ein hinteres Paar von Hilfsrädern ausbilden.

11. Anhänger (3,3') nach Anspruch 1, **dadurch gekennzeichnet, dass** die auf der Platte (8,8') vorgesehene mittige Leitschiene (83) zwischen den vorderen und hinteren Paaren von Hilfsrädern (90) angeordnet ist.

12. Anhänger (3,3') nach den Ansprüchen 8 und 11, **dadurch gekennzeichnet, dass** die mittige Schiene (77) mit dem Rahmen (70) des Gestells (7,7') zwei praktisch parallele Aufnahmen (78) zum Durchgang der Hilfsräder (90) der Platte (8,8') abgrenzt, wenn sie mit dem Gestell (7,7') verbunden ist.

13. Anhänger (3,3') nach den Ansprüchen 8 und 11, **dadurch gekennzeichnet, dass** die Schiene (77) und die Leitschiene (83) mindestens eine abgeschrägte Einfuhrungszone (77a,83a) aufweisen, die dafür vorgesehen ist, den Eingriff der Leitschiene (83) auf der Schiene (77) zu erleichtern.

14. Anhänger (3) nach Anspruch 1, **dadurch gekennzeichnet, dass** mindestens das Gestell (7) oder die Platte (8) Dämpfungseinrichtungen aufweist, die dafür vorgesehen sind, das zwischen diesen mindestens in Zugrichtung des Anhängers (3) vorhandene Spiel zu verringern.

15. Anhänger (3) nach Anspruch 14, **dadurch gekennzeichnet, dass** die Dämpfungseinrichtungen aus Puffern (79) aus einem weichen Werkstoff bestehen, die mindestens zwischen der Schiene (77) und der Leitschiene (83) angeordnet sind.

16. Anhänger (3) nach Anspruch 1, **dadurch gekennzeichnet, dass** die Platte (8) Greifeinrichtungen (85) aufweist, die dafür vorgesehen sind, ihre Verlagerung zu erleichtern.

17. Anhänger (3,3') nach Anspruch 1, **dadurch gekennzeichnet, dass** die Platte (8,8') mindestens eine Plattform (80,80') aufweist, welche die Durchgänge von Gabeln für eine Handhabungsmaschine abgrenzt.

18. Anhänger nach Anspruch 1, **dadurch gekennzeichnet, dass** die Platte mindestens eine neigbare Plattform umfasst.

## Claims

1. A trailer (3, 3') for a transport train (1, 1'), this trailer (3, 3') comprising at least one load-bearing structure (30, 30') intended to transport at least one load (4), rolling means (5) associated with this load-bearing structure (30, 30') and coupling means (6) designed to couple the said trailer (3, 3') to at least one other trailer (3, 3') or to a towing vehicle (2, 2') of the said transport train (1), the load-bearing structure (30, 30') comprising a chassis (7, 7') integral with the rolling means (5) and the coupling means (6), and at least one platform body (8, 8') intended to receive the said load (4) and moveably coupled to the said chassis (7, 7'), the said platform body (8, 8') comprising auxiliary rolling means (9) so as to be able to be displaced in relation to the said chassis (7, 7'), the said chassis (7, 7') and the said platform body (8, 8') comprising guide means for the displacement of the platform body (8, 8') in relation to the chassis (7, 7'),
**characterised in that** the guide means comprise at least one rail (77) and a counter-rail (83) having an at least partially complementary shape and one of which is provided on the said chassis (7, 7') and the other of which is provided on the said platform body (8, 8') and **in that** the said rolling means (5) are disposed beneath the said central rail (77) and comprise at least two fixed wheels (50), the axes of rotation of which are substantially merged.

2. A trailer (3, 3') according to Claim 1, **characterised in that** it comprises locking means (71d, 75') designed to lock the said platform body (8, 8') when it is coupled to the said chassis (7, 7').

3. A trailer (3') according to Claim 1, **characterised in that** the said chassis (7') is formed by a C-shaped frame (70') open laterally so as to be able to extract the said platform body (8') from the said chassis (7') without uncoupling the said trailer (3').

4. A trailer (3) according to Claim 1, **characterised in that** the said chassis (7) is formed of a closed frame (70), one lateral side (71 d) of which is moveable to clear a path so as be able to extract the said platform body (8) from the said chassis (7) without uncoupling the said trailer (3).

5. A trailer (3) according to Claim 4, **characterised in that** the said lateral side (71d) is connected to the said frame (70) by at least one articulation (73) so that it is moveable between a lowered position and a raised position.

6. A trailer (3) according to Claim 5, **characterised in that** the said lateral side (71d) comprises locking means (74, 75) designed to lock it in the lowered position.

7. A trailer (3) according to Claim 5, **characterised in that** the said lateral side (71d) comprises gripping means (76) designed to facilitate its manipulation between its lowered and raised positions.

8. A trailer (3, 3') according to Claim 1, **characterised in that** the said central rail (77) is provided in the said chassis (7, 7') in an arrangement substantially perpendicular to the axis passing through the coupling means (6).

9. A trailer (3, 3') according to Claim 1, **characterised in that** the axis of rotation of the wheels (50) of the said chassis (7, 7') is substantially equidistant to the axes of articulation of the coupling means (6).

10. A trailer (3, 3') according to Claim 1, **characterised in that** the said auxiliary rolling means (9) of the said platform body (8, 8') are formed by at least four auxiliary free wheels (90) disposed in each angle of the said platform body (8, 8') and forming a pair of auxiliary front wheels and a pair of auxiliary rear wheels.

11. A trailer (3, 3') according to Claim 1, **characterised in that** the said central counter-rail (83) provided on the said platform body (8, 8') is disposed between the said pairs of front and rear auxiliary wheels (90).

12. A trailer (3, 3') according to Claims 8 and 11, **characterised in that** the central rail (77) delimits with the said frame (70) of the chassis (7, 7') two substantially parallel housings (78) for the passage of the auxiliary wheels (90) of the said platform body (8, 8') when it is coupled to the said chassis (7, 7').

13. A trailer (3, 3') according to Claims 8 and 11, **characterised in that** the said rail (77) and the said counter-rail (83) comprise at least one chamfered introduction zone (77a, 83a) designed to facilitate the engagement of the said counter-rail (83) on the said rail (77).

14. A trailer (3) according to Claim 1, **characterised in that** at least one of the said chassis (7) or of the said platform body (8) comprises dampening means designed to reduce the clearance existing between them at least in the towing direction of the said trailer (3).

15. A trailer (3) according to Claim 14, **characterised in that** the said dampening means are formed of shock absorbers (79) made from flexible material and disposed at least between the said rail (77) and the said counter-rail (83).

16. A trailer (3) according to Claim 1, **characterised in that** the said platform body (8) comprises gripping means (85) designed to facilitate its displacement.

17. A trailer (3, 3') according to Claim 1, **characterised in that** the said platform body (8, 8') comprises at least one platform (80, 80') delimiting the passage of forks for a transporter.

18. A trailer according to Claim 1, **characterised in that** the said platform body comprises at least one inclinable platform.
